# EUROPÄISCHE PATENTSCHRIFT

(11) **EP 4 315 272 B1**
(45) Veröffentlichungstag und Bekanntmachung des Hinweises auf die Patenterteilung: **15.04.2026**
(21) Anmeldenummer: 22718119.5
(22) Anmeldetag: 24.03.2022
(51) Int. Cl.: G06V 10/60, G06T 7/593, G06V 10/80, G06V 20/56

(54) **VERFAHREN UND SYSTEM ZUR SCHÄTZUNG VON TIEFENINFORMATIONEN**
METHOD AND SYSTEM FOR ESTIMATING DEPTH INFORMATION
MÉTHODE ET SYSTÈME D'ESTIMATION DES INFORMATIONS SUR LA PROFONDEUR

(30) Priorität: 29.03.2021 DE 102021107903
(43) Veröffentlichungstag der Anmeldung: 07.02.2024
(73) Patentinhaber: AUMOVIO Autonomous Mobility Germany GmbH, 85057 Ingolstadt (DE); VOLKSWAGEN AG, 38440 Wolfsburg (DE)
(72) Erfinder: HEINRICH, Stefan, 90411 Nürnberg (DE); KRÖKEL, Dieter, 90411 Nürnberg (DE); FECHNER, Thomas, 90411 Nürnberg (DE); KURZ, Heiko Gustav, 30177 Hannover (DE)
(74) Vertreter: Wolf, Gerhard
(86) Internationale Anmeldenummer: PCT/EP2022/057733
(87) Internationale Veröffentlichungsnummer: WO 2022/207438

(56) Entgegenhaltungen:
- CN-A- 112 184 731
- US-A1- 2020 013 176

## Beschreibung

Die Erfindung betrifft ein Verfahren und ein System zur Ermittlung von Tiefeninformationen zu Bildinformationen, die von bildgebenden Sensoren eines Fahrzeugs bereitgestellt werden, mittels eines künstlichen neuronalen Netzes.

Es ist grundsätzlich bekannt, mittels bildgebenden Sensoren das Umfeld des Fahrzeugs dreidimensional zu erfassen. Zur 3D-Umfelderfassung werden u.a. auch Stereokameras eingesetzt. Zur Berechnung der Entfernungsinformationen werden die Bildinformationen, die von den beiden Kameras bereitgestellt werden, korreliert und mittels Triangulation die Entfernung eines Bildpunkts zum Fahrzeug bestimmt.

Die Kameras für das Stereokamerasystem sind, beispielsweise in den Frontbereich des Fahrzeugs integriert. Der Einbauort ist dabei meist der Frontscheibenbereich oder der Kühlergrill. Um nachts genügend Helligkeit für die Bildauswertung zu erzeugen, werden zumeist die Frontscheinwerfer des Fahrzeugs verwendet.

Problematisch bei der aktuellen 3D-Umfelderfassung ist, dass durch ungleich ausgeleuchtete Bildbereiche in den von den Kameras des Stereokamerasystems gewonnenen Bildinformationen die Bestimmung von Tiefeninformationen erschwert wird, da in diesen ungleich ausgeleuchteten Bereichen keine Entfernungsinformation durch das Stereokamerasystem gewonnen werden kann. Dies gilt insbesondere dann, wenn sich durch die unterschiedliche Einbauposition zwischen den Scheinwerfern und den Kameras ein durch Parallaxe verursachter Schattenwurf ergibt.

Die Druckschrift US 2020/013176 A1 offenbart ein Verfahren zur Schätzung einer Tiefenkarte basierend auf Bildern eines Kamerapaars mittels eines neuronalen Netzes.

Die Druckschrift CN 112184731 A offenbart die Tiefenschätzung mittels einer Stereokamera und einem neuronalen Netz, das die Bildinformationen der Stereokamera verarbeitet.

Ausgehend hiervon ist es Aufgabe der Erfindung, ein Verfahren zur Ermittlung von Tiefeninformationen zu Bildinformationen anzugeben, das eine verbesserte Bestimmung von Tiefeninformationen ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Ermittlung von Tiefeninformationen zu Bildinformationen ist Gegenstand des nebengeordneten Patentanspruchs 15.

Gemäß einem ersten Aspekt bezieht sich die Erfindung auf ein Verfahren zur Ermittlung von Tiefeninformationen zu Bildinformationen mittels eines künstlichen neuronalen Netzes in einem Fahrzeug. Bei dem neuronalen Netz handelt es sich vorzugsweise um ein Faltungsnetz (CNN).

Der Schutzbereich der vorliegenden Erfindung wird durch die beigefügten Ansprüche definiert.

Das Verfahren umfasst die folgenden Schritte:
Zunächst wird zumindest ein Emitter und zumindest ein erster und ein zweiter Empfangssensor bereitgestellt. Der Emitter kann dazu ausgebildet sein, elektromagnetische Strahlung im für den Menschen sichtbaren Spektralbereich auszusenden. Alternativ kann der Emitter elektromagnetische Strahlung im infraroten Spektralbereich, im Frequenzbereich von etwa 24 GHz oder etwa 77 GHz (Emitter ist Radar-Emitter) oder Laserstahlung (Emitter ist LIDAR-Emitter) aussenden. Der erste und zweite Empfangssensor sind beabstandet zueinander angeordnet. Die Empfangssensoren sind an den Emittertyp angepasst, d.h. die Empfangssensoren sind dazu ausgebildet, reflektierte Anteile des von dem zumindest einen Emitter ausgesendeten elektromagnetischen Strahlung zu empfangen. Insbesondere können die Empfangssensoren dazu ausgebildet sein, elektromagnetische Strahlung im sichtbaren oder infraroten Spektralbereich, im Frequenzbereich von etwa 24 GHz oder etwa 77 GHz (Radarempfänger) oder Laserstahlung (LIDAR-Empfänger) zu empfangen.

Anschließend erfolgt ein Aussenden von elektromagnetischer Strahlung durch den Emitter und ein Empfangen von reflektierten Anteilen der vom Emitter ausgesandten elektromagnetischen Strahlung durch den ersten und zweiten Empfangssensor. Basierend auf den empfangenen reflektierten Anteilen erzeugen der erste Empfangssensor erste Bildinformationen und der zweite Empfangssensor zweite Bildinformationen.

Die ersten und zweiten Bildinformationen werden anschließend verglichen, um zumindest einen in den ersten und zweiten Bildinformationen ungleich beleuchteten Bildbereich zu bestimmen, der aufgrund der beabstandeten Anordnung der Empfangssensoren durch die Parallaxe entsteht. Wenn der erste und zweite Empfangssensor nicht jeweils im Projektionszentrum eines Emitters, insbesondere eines Scheinwerfers liegt, kann der ungleich beleuchtete Bildbereich auch durch die Parallaxe zwischen dem jeweiligen Empfangssensor und dem ihm zugeordneten Emitter entstehen. In anderen Worten wird demnach zumindest ein Bildbereich als "ungleich beleuchteter Bildbereich" bestimmt, der in den ersten Bildinformationen heller oder dunkler ist als in den zweiten Bildinformationen.

Daraufhin werden geometrische Informationen des zumindest einen ungleich beleuchteten Bildbereichs ausgewertet und es werden Tiefeninformationen durch das künstliche neuronale Netz basierend auf dem Ergebnis der Auswertung der geometrischen Informationen des zumindest einen ungleich beleuchteten Bildbereichs geschätzt. In anderen Worten werden die Größe bzw. die Ausdehnung des ungleich beleuchteten Bildbereichs ausgewertet, da sich dadurch mittels des neuronalen Netzes Rückschlüsse auf die dreidimensionale Ausgestaltung eines Objekts (z.B. ein bestimmter Bereich des Objekts weist einen geringeren Abstand zum Fahrzeug auf als ein anderer Bereich) bzw. den Abstand zweier Objekte, die sich im Umgebungsbereich des Fahrzeugs befinden, ziehen lassen.

Der technische Vorteil des vorgeschlagenen Verfahrens besteht darin, dass sich durch das neuronale Netz selbst aus ungleich beleuchteten Bereichen, in denen mittels Triangulation keine Tiefenbestimmung möglich ist, aus den geometrischen Informationen dieses ungleich beleuchteten Bildbereichs Rückschlüsse auf den Abstand eines oder mehrerer Objekte, die in diesem ungleich beleuchteten Bildbereich und/oder um diesen ungleich beleuchteten Bereich herum dargestellt sind, ziehen lassen. Dadurch kann eine genauere und auch gegen Störeinflüsse robustere dreidimensionale Umfelderfassung erfolgen.

Gemäß einem Ausführungsbeispiel ergeben sich der ungleich beleuchtete Bildbereich im Übergangsbereich zwischen einem ersten Objekt und einem zweiten Objekt, die einen unterschiedlichen Abstand zu dem ersten und zweiten Empfangssensor aufweisen. Die geschätzten Tiefeninformationen sind damit Tiefendifferenzinformationen, die eine Information zu der Abstandsdifferenz zwischen dem ersten und zweiten Objekt und dem Fahrzeug enthalten. Dadurch ist eine verbesserte Trennung von Vordergrundobjekten und Hintergrundobjekten möglich. Ein Vordergrundobjekt ist dabei ein Objekt, das näher am Fahrzeug vorgesehen ist als ein Hintergrundobjekt.

Weiterhin ist es möglich, dass sich der ungleich beleuchtete Bildbereich auf ein einzelnes Objekt bezieht, wobei sich die ungleiche Beleuchtung des Bildbereichs aufgrund der dreidimensionalen Ausgestaltung des einzelnen Objekts ergibt. Dadurch ist es möglich, die Bestimmung von dreidimensionalen Oberflächenformen von Objekten zu verbessern.

Gemäß einem Ausführungsbeispiel ist der Emitter zumindest ein Scheinwerfer, der sichtbares Licht im Wellenlängenbereich zwischen 380nm und 800nm emittiert und der erste und zweite Empfangssensor ist jeweils eine Kamera. Dadurch kann die am Fahrzeug vorhandene Frontbeleuchtung und im sichtbaren Spektralbereich arbeitende Kameras als Erfassungssensorik verwendet werden.

Vorzugsweise bilden der erste und zweite Empfangssensor ein Stereokamerasystem. Dabei werden die von den Empfangssensoren bereitgestellten Bildinformationen miteinander korreliert und basierend auf den Einbaupositionen der Empfangssensoren wird der Abstand der jeweiligen Bildpunkte der Bildinformationen zum Fahrzeug bestimmt. Dadurch lassen sich Tiefeninformationen zu den Bildbereichen gewinnen, die von beiden Empfangssensoren erfasst werden.

Gemäß einem Ausführungsbeispiel sind zumindest zwei Emitter in Form der Frontscheinwerfer des Fahrzeugs vorgesehen und jeweils ein Empfangssensor ist einem Frontscheinwerfer derart zugeordnet, dass die Sichtverbindungsgerade zwischen einem zu erfassenden Objekt und dem Frontscheinwerfer im Wesentlichen parallel zu der Sichtverbindungsgerade zwischen einem zu erfassenden Objekt und dem diesem Frontscheinwerfer zugeordneten Empfangssensor verläuft. "Im Wesentlichen parallel" bedeutet hier insbesondere Winkel kleiner als 10°. Insbesondere kann der Empfangssensor sehr nahe am Projektionszentrum des ihm zugeordneten Scheinwerfers liegen, beispielsweise einen Abstand kleiner als 20cm haben. Dadurch ist der Ausleuchtbereich des Scheinwerfers im Wesentlichen gleich dem Erfassungsbereich des Empfangssensors und es ergibt sich eine im wesentlichen Parallaxe-freie Einbausituation, was zu einer homogenen Ausleuchtung des Erfassungsbereich des Empfangssensors ohne Beleuchtungsschatten durch den ihm zugeordneten Scheinwerfer führt.

Gemäß einem Ausführungsbeispiel sind der erste und zweite Empfangssensor in die Frontscheinwerfer des Fahrzeugs integriert. Dadurch kann erreicht werden, dass der Ausleuchtbereich des Scheinwerfers im Wesentlichen gleich dem Erfassungsbereich des Empfangssensors ist. Dadurch ergibt sich eine vollständige oder nahezu vollständige Parallaxe-freie Einbausituation.

Gemäß einem Ausführungsbeispiel vollzieht das künstliche neuronale Netz die Tiefenschätzung basierend auf der in horizontaler Richtung gemessenen Breite des ungleich beleuchteten Bildbereichs. Vorzugsweise ist das neuronale Netz dazu trainiert, die Abhängigkeit der Breite des ungleich beleuchteten Bildbereichs von der dreidimensionalen Gestalt des Umgebungsbereichs, den dieser Bildbereich darstellt, dazu zu verwenden, Tiefeninformationen zu schätzen. Insbesondere die horizontale Breite des ungleich beleuchteten Bildbereichs ist dabei dazu geeignet, Tiefendifferenzen zu dem ungleich beleuchteten Bildbereich zu bestimmen. Die Tiefendifferenz kann sich dabei auf ein einzelnes konturiertes Objekt beziehen oder aber auf mehrere Objekte, wobei sich ein Objekt (auch als Vordergrundobjekt bezeichnet) vor einem weiteren Objekt (auch als Hintergrundobjekt bezeichnet) befindet.

Es versteht sich, dass neben der in horizontaler Richtung gemessenen Breite des ungleich beleuchteten Bildbereichs auch weitere geometrische Informationen und/oder Abmessungen des ungleich beleuchteten Bildbereichs bestimmt werden können, um Tiefeninformationen zu schätzen. Dies können insbesondere eine in vertikaler Richtung gemessene Höhe oder eine in Schrägrichtung (quer zur Horizontalen) gemessene Abmessung sein.

Gemäß einem Ausführungsbeispiel ermittelt das künstliche neuronale Netz in Bildbereichen, die durch den ersten und zweiten Empfangssensor erfasst werden, Tiefeninformationen basierend auf einer Triangulation zwischen Bildpunkten in den ersten und zweiten Bildinformationen und dem ersten und zweiten Empfangssensor. Bevorzugt erfolgt also die Bestimmung der Tiefeninformationen mittels Triangulation durch das künstliche neuronale Netz, das auch die Schätzung der Tiefeninformationen basierend auf den geometrischen Informationen des ungleich beleuchteten Bildbereichs vornimmt, d.h. die Tiefenbestimmung durch Triangulation und die Auswertung von geometrischen Informationen eines ungleich beleuchteten Bildbereichs erfolgt durch ein und dasselbe neuronale Netz. Aufgrund der Verwendung mehrerer unterschiedlicher Mechanismen zur Bestimmung der Tiefeninformationen kann eine verbesserte und eine robustere dreidimensionale Umfeldbestimmung erfolgen.

Gemäß einem Ausführungsbeispiel vergleicht das neuronale Netz Tiefeninformationen, die durch Triangulation ermittelt werden, und geschätzte Tiefeninformationen, die durch die Auswertung der geometrischen Informationen des zumindest einen ungleich beleuchteten Bildbereichs erhalten werden, miteinander und erzeugt basierend auf dem Vergleich angepasste Tiefeninformationen. Dadurch lassen sich Triangulationsungenauigkeiten vorteilhaft beheben, so dass insgesamt zuverlässigere Tiefeninformationen erhalten werden.

Gemäß einem Ausführungsbeispiel nimmt das künstliche neuronale Netz eine Anpassung der Tiefeninformationen, die durch Triangulation ermittelt werden, basierend auf der Auswertung der geometrischen Informationen des zumindest einen ungleich beleuchteten Bildbereichs vor. In anderen Worten werden die durch Triangulation ermittelten Tiefeninformationen basierend auf den geschätzten Tiefeninformationen modifiziert. Dadurch wird eine robustere dreidimensionale Umfeldbestimmung erreicht.

Gemäß einem Ausführungsbeispiel werden durch den zumindest einen Emitter IR-Strahlung, Radarsignale oder Laserstrahlung ausgesendet.

Dementsprechend kann zumindest ein Teil der Empfangssensoren durch Infrarotkameras, Radarempfänger oder Empfänger für Laserstrahlung gebildet werden. Insbesondere sind die Empfangssensoren entsprechend dem zumindest einen Emitter gewählt, dem diese Empfangssensoren zugeordnet sind. So sind beispielsweise die Empfangssensoren dazu vorgesehen, Infrarotstrahlung (IR) zu empfangen, wenn sie einem IR-Emitter zugeordnet sind. Insbesondere können zur Erfassung des Umgebungsbereichs seitlich neben dem Fahrzeug oder hinter dem Fahrzeug Emitter und Empfangssensoren verwendet werden, die kein Licht im sichtbaren Wellenlängenbereich abstrahlen, da dies die übrigen Verkehrsteilnehmer beeinträchtigen würde. Dadurch ist es möglich eine zumindest teilweise Rundumerfassung des Umgebungsbereichs des Fahrzeugs zu ermöglichen.

Gemäß einem Ausführungsbeispiel werden zur Schätzung von Tiefeninformationen zu Bildinformationen, die Bereiche seitlich neben dem Fahrzeug und/oder hinter dem Fahrzeug darstellen, mehr als ein Emitter und mehr als zwei Empfangssensoren zur Ermittlung von Bildinformationen verwendet, wobei mehrere Sensorgruppen vorgesehen sind, die jeweils zumindest einen Emitter und zumindest zwei Empfangssensoren aufweisen und wobei die Bildinformationen der jeweiligen Sensorgruppen zu einer Gesamtbildinformation zusammengeführt werden. Dadurch lässt sich eine zumindest teilweise Rundumerfassung des Umgebungsbereichs des Fahrzeugs realisieren.

Gemäß einem Ausführungsbeispiel nutzen die Sensorgruppen zumindest teilweise elektromagnetische Strahlung in unterschiedlichen Frequenzbändern. So kann beispielsweise im Frontbereich des Fahrzeugs ein Stereokamerasystem verwendet werden, das einen Emitter nutzt, der Licht im sichtbaren Spektralbereich emittiert, wohingegen in den Seitenbereichen des Fahrzeugs beispielsweise Emitter verwendet werden, die IR-Strahlung oder Radarstrahlung nutzt.

Gemäß einem weiteren Aspekt betrifft die Erfindung ein System zur Ermittlung von Tiefeninformationen zu Bildinformationen in einem Fahrzeug, umfassend eine Rechnereinheit, die Rechenoperationen eines künstlichen neuronalen Netzes ausführt, zumindest einen Emitter, der zum Aussenden von elektromagnetischer Strahlung ausgebildet ist, und zumindest einen ersten und einen zweiten Empfangssensor, die beabstandet zueinander angeordnet sind. Der erste und zweite Empfangssensor ist zum Empfangen von reflektierten Anteilen der vom Emitter ausgesandten elektromagnetischen Strahlung ausgebildet. Der erste Empfangssensor ist zur Erzeugung von ersten Bildinformationen und der zweite Empfangssensor ist zur Erzeugung von zweiten Bildinformationen basierend auf den empfangenen reflektierten Anteilen ausgebildet. Das künstliche neuronale Netz ist dazu konfiguriert:
- die ersten und zweiten Bildinformationen zur Bestimmung zumindest eines in den ersten und zweiten Bildinformationen ungleich beleuchteten Bildbereichs zu vergleichen, wobei der ungleich beleuchtete Bildbereich aufgrund der beabstandeten Anordnung der Empfangssensoren durch die Parallaxe entsteht;
- die geometrischen Informationen des zumindest einen ungleich beleuchteten Bildbereichs auszuwerten und Tiefeninformationen basierend auf dem Ergebnis der Auswertung der geometrischen Informationen des zumindest einen ungleich beleuchteten Bildbereichs zu schätzen.

Wenn der erste und zweite Empfangssensor nicht jeweils im Projektionszentrum eines Emitters, insbesondere eines Scheinwerfers liegt, kann der ungleich beleuchtete Bildbereich auch durch die Parallaxe zwischen dem jeweiligen Empfangssensor und dem ihm zugeordneten Emitter entstehen.

Unter "Bildinformationen" im Sinne der Offenbarung werden jegliche Informationen verstanden, basierend eine mehrdimensionale Darstellung der Fahrzeugumgebung erfolgen kann. Dies sind insbesondere Informationen, die von bildgebenden Sensoren, beispielsweise einer Kamera, einem RADAR-Sensor oder einem LIDAR-Sensor bereitgestellt werden.

Unter "Emitter" im Sinne der vorliegenden Offenbarung werden Sendeeinheiten verstanden, die zum Aussenden elektromagnetischer Strahlung ausgebildet sind. Dies sind beispielsweise Scheinwerfer, Infrarot-Strahler, RADAR-Sendeeinheiten oder LIDAR-Sendeeinheiten.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung eines Fahrzeugs mit einem Stereokamerasystem, das zur Erfassung von Objekten vor dem Fahrzeug ausgebildet ist;
- Fig. 2: beispielhaft eine schematische Darstellung von durch einen ersten Erfassungssensor erfassten ersten Bildinformationen, auf denen die zwei Objekte und ungleich beleuchtete Bereiche im Übergangsbereich zwischen den Objekten erkennbar sind;
- Fig. 3: beispielhaft eine schematische Darstellung von durch einen zweiten Erfassungssensor erfassten zweiten Bildinformationen, auf denen die zwei Objekte und ungleich beleuchtete Bereiche im Übergangsbereich zwischen den Objekten erkennbar sind;
- Fig. 4: beispielhaft eine schematische Darstellung eines Fahrzeugs mit mehreren Sensorgruppen, die zur Erfassung von Objekten im Umgebungsbereich des Fahrzeugs ausgebildet sind; und
- Fig. 5: beispielhaft ein Ablaufdiagramm zur Verdeutlichung der Schritte eines Verfahrens zur Ermittlung von Tiefeninformationen zu Bildinformationen mittels eines künstlichen neuronalen Netzes.

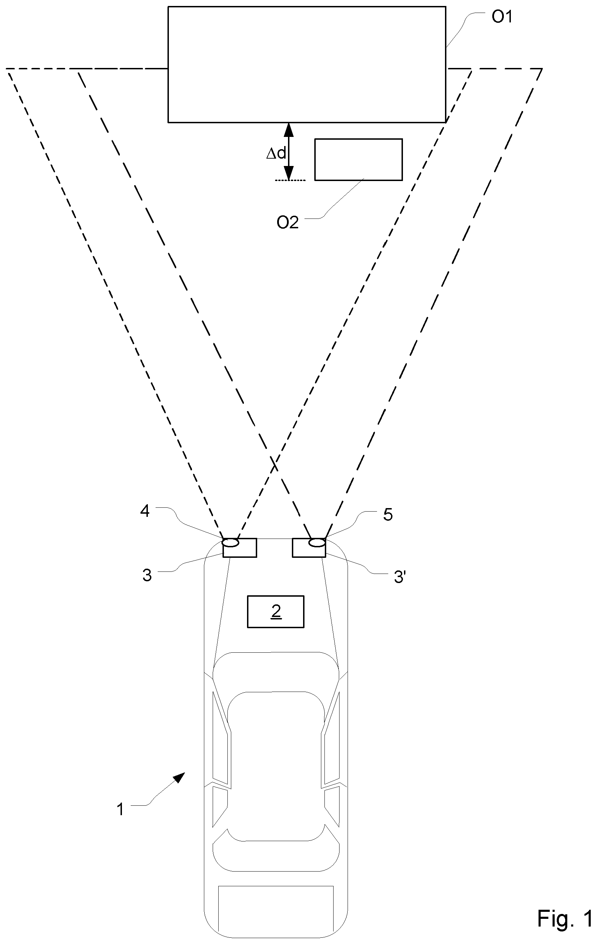

Figur 1 zeigt beispielhaft ein Fahrzeug 1, das mit einem Stereokamerasystem ausgestattet ist. Das Stereokamerasystem umfasst einen ersten Empfangssensor 4 und einen zweiten Empfangssensor 5, die beispielsweise Bildaufnahmeeinrichtungen, insbesondere Kameras sind. Ferner weist das Fahrzeug 1 einen ersten Emitter 3 und einen zweiten Emitter 3' auf, die beispielsweise durch die Frontscheinwerfer des Fahrzeugs 1 gebildet werden. Die Emitter 3, 3' sind demnach zur Aussendung von für den Menschen sichtbaren Lichts, insbesondere im Wellenlängenbereich zwischen 380nm und 800nm ausgebildet. Die Empfangssensoren 4, 5 sind dementsprechend zum Empfang von Licht in diesem Wellenlängenbereich ausgebildet und stellen Bildinformationen bereit. Insbesondere stellt der erste Empfangssensor 4 erste Bildinformationen B1 und der zweite Empfangssensor 5 zweite Bildinformationen B2 zur Verfügung.

Zur Auswertung der von den Empfangssensoren bereitgestellten Bildinformationen B1, B2 weist das Fahrzeug 1 eine Rechnereinheit 8 auf, die zur Auswertung der Bildinformationen B1, B2 ausgebildet ist. Insbesondere ist die Rechnereinheit 8 dazu ausgebildet, aus Bildinformationen B1, B2 der zumindest zwei Empfangssensoren 4, 5 Tiefeninformationen zu generieren, um eine dreidimensionale Erfassung der Umgebung um das Fahrzeug 1 zu ermöglichen.

Zur Auswertung der Bildinformationen B1, B2 ist in der Rechnereinheit 8 ein künstliches neuronales Netz 2 implementiert. Das künstliche neuronale Netz 2 ist derart ausgebildet und trainiert, dass es zum einen Tiefeninformationen zu den Bildinformationen B1, B2 mittels Triangulation berechnet und diese berechneten Tiefeninformationen anschließend mittels einer Tiefeninformationsschätzung überprüft bzw. modifiziert, die mittels einem Vergleich der Bildinformationen B1, B2 ungleich beleuchtete Bildbereiche bestimmt, deren Geometrie bzw. Abmessungen auswertet und basierend darauf geschätzte Tiefeninformationen ermittelt, basierend auf denen die Anpassung der mittel der Triangulation berechneten Tiefeninformationen erfolgen kann.

In Fig. 1 ist ein erstes Objekt O1 und ein zweites Objekt O2 gezeigt, die sich vor dem Fahrzeug 1 befinden und durch die Frontscheinwerfer des Fahrzeugs 1 beleuchtet werden können. Die Empfangssensoren 4, 5 können die von den Objekten O1, O2 reflektierten Anteile des von den Frontscheinwerfen emittierten Lichts empfangen.

Die Objekte O1, O2 weisen einen unterschiedlichen Abstand zum Fahrzeug 1 auf. Zudem befindet sich das zweite Objekt O2 - aus Sicht des Fahrzeugs 1 und bezogen auf die Sichtverbindungsgerade zwischen den Objekten O1, O2 und den Empfangssensoren 4, 5 - vor dem ersten Objekt O1. Die dem Fahrzeug 1 zugewandte Vorderseite des zweiten Objekts O2 ist beispielsweise um eine Wegstrecke Δd vor der ebenfalls dem Fahrzeug 1 zugewandten Vorderseite des ersten Objekts O1 vorgesehen.

Durch die beabstandete Anordnung der Emitter 3, 3' (hier die Frontscheinwerfer des Fahrzeugs 1) und der Empfangssensoren 4, 5 entstehen aufgrund der Parallaxe Helligkeitsunterschiede in den ersten und zweiten Bildinformationen B1, B2, d.h. der erste Empfangssensor 4 stellt Bildinformationen B1 mit Helligkeitsunterschieden in anderen Bereichen bereit als in den zweiten Bildinformationen B2, die der zweite Empfangssensor 5 erzeugt.

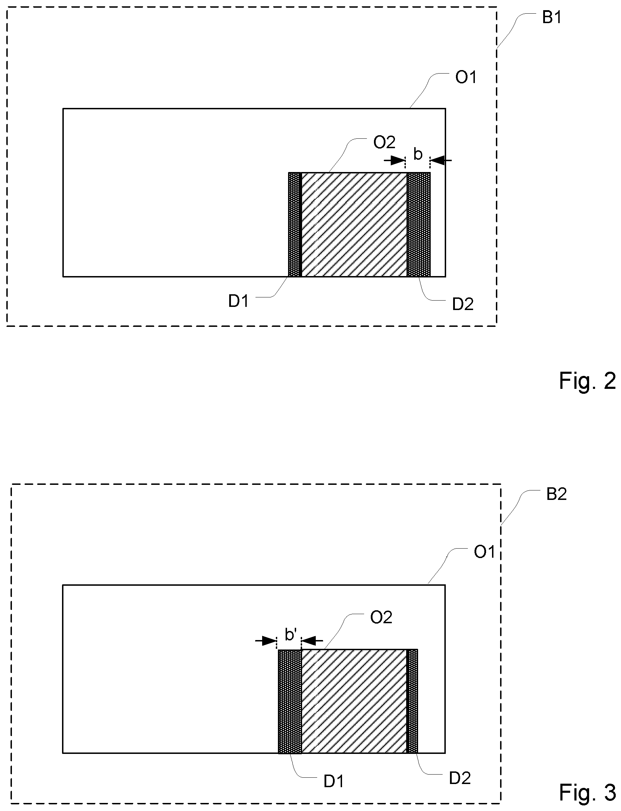

Fig. 2 und 3 zeigen diesen Effekt beispielhaft und schematisch. Die Figur 2 zeigt beispielhaft erste Bildinformationen B1, die von dem ersten Empfangssensor 4 bereitgestellt werden, der in Vorwärtsfahrtrichtung FR des Fahrzeugs 1 links am Fahrzeug 1 vorgesehen ist. Es sind zwei ungleich beleuchtete Bildbereiche D1, D2 zu erkennen, die dadurch entstehen, dass die Szene, die diese Bildbereiche D1, D2 abbilden, nur von jeweils einem Emitter 3, 3' angestrahlt werden und der erste Empfangssensor 4 die Objekte O1, O2 von vorne in einer Blickrichtung von schräg links sieht. Der ungleich beleuchtete Bildbereich D2 weist dadurch eine größere Breite b (in horizontaler Richtung gemessen) auf als der ungleich beleuchtete Bildbereich D1.

Die Figur 3 zeigt beispielhaft zweite Bildinformationen B2, die von dem zweiten Empfangssensor 5 bereitgestellt werden, der in Vorwärtsfahrtrichtung FR des Fahrzeugs 1 rechts am Fahrzeug 1 vorgesehen ist. Auch in den zweiten Bildinformationen B2 sind zwei ungleich beleuchtete Bildbereiche D1, D2 zu erkennen, die wiederum dadurch entstehen, dass die Szene, die diese Bildbereiche D1, D2 abbilden, nur von jeweils einem Emitter 3, 3' angestrahlt werden und der zweite Empfangssensor 4 die Objekte O1, O2 von vorne in einer Blickrichtung von schräg rechts sieht. Der ungleich beleuchtete Bildbereich D1 weist dadurch eine größere Breite b' (in horizontaler Richtung gemessen) auf als der ungleich beleuchtete Bildbereich D2.

Es sei angemerkt, dass aufgrund der Beabstandung der Empfangssensoren 4, 5 zueinander ein Emitter 3 ausreichend ist, ungleich beleuchtete Bildbereiche D1, D2 in den ersten und zweiten Bildinformationen B1, B2 zu erzeugen. Vorteilhaft ist es jedoch, wenn jedem Empfangssensor 4, 5 jeweils ein Emitter 3, 3' zugeordnet ist und diese Emitter 3, 3' jeweils in der Nähe des ihnen zugeordneten Empfangssensors 4, 5 liegen, wobei "in der Nähe" insbesondere Abstände kleiner als 20 cm bedeuten. Bevorzugt ist der Empfangssensor 4, 5 in den Emitter 3, 3' integriert, beispielsweise als in den Frontscheinwerfer integrierte Kamera.

Das neuronale Netz 2 ist dazu ausgebildet, die Bildinformationen B1, B2 miteinander zu vergleichen, ungleich ausgeleuchtete Bildbereiche D1, D2 zu bestimmen und durch Auswertung von Geometrieunterschieden, die zwischen den ungleich ausgeleuchteten Bildbereiche D1, D2 in den ersten und zweiten Bildinformationen B1, B2 bestehen, Tiefeninformationen zu schätzen.

Wie zuvor bereits ausgeführt, ist das neuronale Netz 2 dazu konfiguriert, den Abstand des Fahrzeugs 1 zu Bereichen der erfassten Szene, die durch den ersten und zweiten Empfangssensor 4, 5 sichtbar sind, und damit auf beiden Bildinformationen B1, B2 zu sehen sind, durch Triangulation zu ermitteln. Dabei werden beispielsweise die Bildinformationen B1, B2 zu einem Gesamtbild zusammengeführt und für die Pixel des Gesamtbildes, das einem in beiden Bildinformationen B1, B2 dargestellten Bereich entspricht, eine Tiefeninformation berechnet.

Nachteilig hierbei ist, dass für Bereiche eines Hintergrundobjekts, in den Fig. 2 und 3 das Objekt O1, die aufgrund der Parallaxe nicht in beiden Bildinformationen B1, B2 sichtbar sind (in den Fig. 2 und 3 die ungleich beleuchteten Bereiche D1 und D2), keine Tiefeninformationen berechnet werden können.

Jedoch ist es durch einen Schätzvorgang des neuronalen Netzes 2 möglich, durch einen Vergleich der geometrischen Abmessungen der ungleich beleuchteten Bereiche D1, D2 in den Bildinformationen B1, B2 Tiefeninformationen zu schätzen. Insbesondere kann die in horizontaler Richtung gemessene Breite der ungleich beleuchteten Bereiche D1, D2 dazu verwendet werden, die Tiefeninformationen zu schätzen. Das neuronale Netz 2 kann beispielsweise aus dem Vergleich der geometrischen Abmessungen der ungleich beleuchteten Bereiche D1, D2 ableiten, wie groß der Abstand Δd der Objekte O1, O2 ist, d.h. im gezeigten Ausführungsbeispiel, wie weit das Objekt O2 vor dem Objekt O1 angeordnet ist. Dadurch wird eine geschätzte Tiefeninformation erhalten, basierend auf der eine Korrektur der durch Triangulation berechneten Tiefeninformationen möglich ist. Dadurch werden modifizierte Tiefeninformationen erzeugt, die für die dreidimensionale Darstellung der Fahrzeugumgebung verwendet werden.

Wenn zum Beispiel durch die Triangulation an einem bestimmen Bildpunkt ein Abstand Δd zwischen den Objekten O1 und O2 von 2m mittels Triangulation berechnet wird, die Tiefenschätzung basierend auf den ungleich beleuchteten Bereichen lediglich einen Abstand zwischen den Objekten O1 und O2 von 1,8m ergibt, können die durch Triangulation erhaltenen Tiefeninformationen basierend auf den geschätzte Tiefeninformationen modifiziert werden, so dass die modifizierten Tiefeninformationen beispielsweise einen Abstand Δd zwischen den Objekten O1, O2 von 1,9m angeben.

Es versteht sich, dass basierend auf dem Vergleich der ungleich beleuchteten Bereiche D1, D2 auch ermittelbar ist, welchem Objekt O1, O2 diese Bereiche zugeordnet werden können und dadurch auch in Bereichen, die nicht durch beide Empfangssensoren 4, 5 erfassbar sind, eine Tiefenschätzung möglich ist.

Für das Training des neuronalen Netzes 2 können Trainingsdaten in Form von Bildinformationspaaren verwendet werden, die eine Umgebung im Fahrzeugbereich simulieren. Die Bildinformationen der Bildinformationspaare sind dabei Darstellungen der gleichen Szene aus unterschiedlichen Richtungen, und zwar so, wie die zueinander beabstandeten Erfassungssensoren 4, 5, 6, 6' die Szene aus deren Erfassungsposition wahrnehmen. Die Bildinformationen der Bildinformationspaare weisen zudem ungleich beleuchtete Bildbereiche auf, die durch zumindest einen, vorzugsweise zwei Emitter 3, 3' entstehen. In den Trainingsdaten sind zudem auch zu den ungleich beleuchteten Bildbereichen Tiefeninformationen vorhanden. Dadurch ist es möglich, das neuronale Netz 2 derart zu trainieren und dessen Gewichtungsfaktoren derart anzupassen, dass sich die aus den geometrischen Informationen der ungleich beleuchteten Bildbereiche geschätzten Tiefeninformationen an die tatsächlichen Tiefeninformationen annähern.

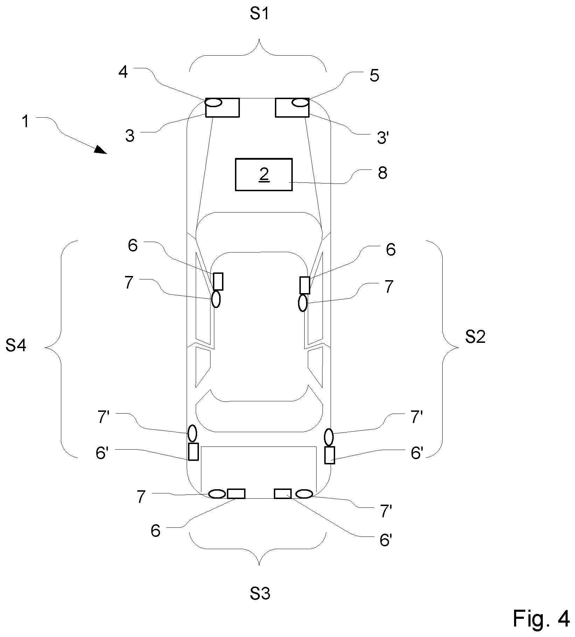

Fig. 4 zeigt ein Fahrzeug 1 an dem mehrere Sensorgruppen S1 - S4 zur Erfassung von Umgebungsinformationen des Fahrzeugs vorgesehen sind. Die Sensorgruppe S1 ist beispielsweise zur Erfassung der Umgebung vor dem Fahrzeug 1, die Sensorgruppe S2 beispielsweise zur Erfassung der Umgebung rechts neben dem Fahrzeug 1, die Sensorgruppe S3 beispielsweise zur Erfassung der Umgebung hinter dem Fahrzeug 1 und die Sensorgruppe S4 beispielsweise zur Erfassung der Umgebung links neben dem Fahrzeug 1 vorgesehen.

Die Sensorgruppen S1 - S4 weisen jeweils zumindest einen Emitter 6, 6', vorzugsweise zumindest zwei Emitter 6, 6', und jeweils zumindest zwei Erfassungssensoren 7, 7' auf.

Die Sensoren der jeweiligen Sensorgruppen S1 - S4 erzeugen jeweils, wie zuvor beschrieben, dreidimensionale Teilumgebungsinformationen in ihrem Erfassungsbereich. Vorzugsweise überlappen die Erfassungsbereiche der Sensorgruppen S1 - S4 und damit auch die von ihnen bereitgestellten Teilumgebungsinformationen. Diese Teilumgebungsinformationen lassen sich vorteilhafter Weise zu einer Gesamtumgebungsinformation verknüpfen, wobei die Gesamtumgebungsinformation beispielsweise eine Rundum-Umgebungsdarstellung (360°) bzw. eine teilweise Rundum-Umgebungsdarstellung (beispielsweise größer 90° aber kleiner als 360°) ist.

Da eine seitliche bzw. rückwärtige Beleuchtung mit sichtbarem Licht ähnlich der Frontscheinwerfer nicht möglich ist, kann bei den Sensorgruppen S2 bis S4 elektromagentische Strahlung im nicht sichtbaren Wellenlängenbereich abgestrahlt werden, beispielsweise IR-Strahlung, Radarstrahlung oder Laserstrahlung. Damit können die Emitter 6, 6' beispielsweise Infrarotlicht-Emitter, Radar-Emitter oder LIDAR-Emitter sein. Die Empfangssensoren 7, 7' sind dabei jeweils an die Strahlung der korrespondierenden Emitter 6, 6' angepasst, d.h. IR-Empfänger, Radar-Empfänger oder LIDAR-Empfänger.

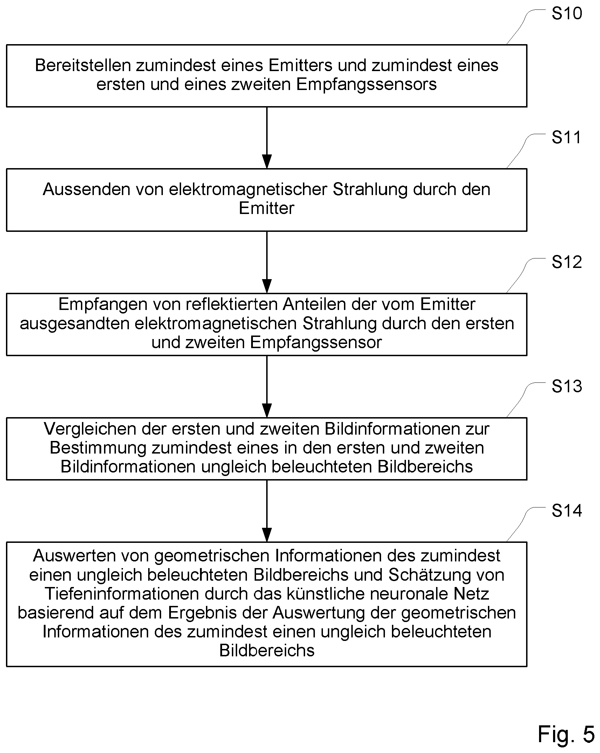

Fig. 5 zeigt ein Diagramm, das die Schritte eines Verfahrens zur Ermittlung von Tiefeninformationen zu Bildinformationen mittels eines künstlichen neuronalen Netzes 2 in einem Fahrzeug 1 illustriert.

Zunächst wird zumindest ein Emitter und zumindest ein erster und ein zweiter Empfangssensor bereitgestellt (S10). Der erste und zweite Empfangssensor sind dabei beabstandet zueinander angeordnet.

Anschließend wird elektromagnetische Strahlung durch den Emitter ausgesendet (S11). Dies kann beispielsweise Licht im sichtbaren Spektralbereich, im infraroten Spektralbereich, Laserlicht oder Radarstrahlung sein.

Anschließend werden reflektierte Anteile der vom Emitter ausgesandten elektromagnetischen Strahlung durch den ersten und zweiten Empfangssensor empfangen und erste Bildinformationen durch den ersten Empfangssensor und zweite Bildinformationen durch den zweiten Empfangssensor basierend auf den empfangenen reflektierten Anteilen erzeugt (S12).

Daraufhin werden die ersten und zweiten Bildinformationen zur Bestimmung zumindest eines in den ersten und zweiten Bildinformationen ungleich beleuchteten Bildbereichs verglichen (S13). Der ungleich beleuchtete Bildbereich entsteht dabei aufgrund der beabstandeten Anordnung der Empfangssensoren durch die Parallaxe.

Anschließend werden die geometrischen Informationen des zumindest einen ungleich beleuchteten Bildbereichs ausgewertet und Tiefeninformationen durch das künstliche neuronale Netz basierend auf dem Ergebnis der Auswertung der geometrischen Informationen des zumindest einen ungleich beleuchteten Bildbereichs geschätzt (S14).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fahrzeug
- 2: neuronales Netz
- 3: erster Emitter
- 3': zweiter Emitter
- 4: erster Empfangssensor
- 5: zweiter Empfangssensor
- 6, 6': Emitter
- 7, 7': Empfangssensor
- 8: Rechnereinheit

- b, b': Breite
- B1: erste Bildinformation
- B2: zweite Bildinformation
- D1, D2: ungleich beleuchteter Bereich
- Δd: Abstand/Wegstrecke
- O1: erstes Objekt
- O2: zweites Objekt

- S1 - S4: Sensorgruppen

## Patentansprüche

1. Verfahren zur Ermittlung von Tiefeninformationen zu Bildinformationen mittels eines künstlichen neuronalen Netzes (2) in einem Fahrzeug (1), umfassend die folgenden Schritte:
- Bereitstellen zumindest eines Emitters (3, 3') und zumindest eines ersten und eines zweiten Empfangssensors (4, 5), wobei der erste und zweite Empfangssensor (4, 5) beabstandet zueinander angeordnet sind (S10);
- Aussenden von elektromagnetischer Strahlung durch den Emitter (3, 3') (S11);
- Empfangen von reflektierten Anteilen der vom Emitter (3, 3') ausgesandten elektromagnetischen Strahlung durch den ersten und zweiten Empfangssensor (4, 5) und Erzeugung von ersten Bildinformationen (B1) durch den ersten Empfangssensor (4) und zweiten Bildinformationen (B2) durch den zweiten Empfangssensor (5) basierend auf den empfangenen reflektierten Anteilen (S12);
- Vergleichen der ersten und zweiten Bildinformationen (B1, B2) zur Bestimmung zumindest eines in den ersten und zweiten Bildinformationen enthaltenen, Helligkeitsunterschiede aufweisenden Bildbereichs (D1, D2), der aufgrund der beabstandeten Anordnung der Empfangssensoren (4, 5) durch die Parallaxe entsteht (S13);
- Auswerten von geometrischen Informationen des zumindest einen Helligkeitsunterschiede aufweisenden Bildbereichs (D1, D2) und Schätzung von Tiefeninformationen durch das künstliche neuronale Netz (2) basierend auf dem Ergebnis der Auswertung der geometrischen Informationen des zumindest einen Helligkeitsunterschiede aufweisenden Bildbereichs (S14).

2. Verfahren nach Anspruch 1, **dadurch gekennzeichnet, dass** sich der Helligkeitsunterschiede aufweisende Bildbereich (D1, D2) im Übergangsbereich zwischen einem ersten Objekt (O1) und einem zweiten Objekt (O2) ergeben, die einen unterschiedlichen Abstand zu dem ersten und zweiten Empfangssensor (4, 5) aufweisen und dass die geschätzten Tiefeninformationen Tiefendifferenzinformationen sind, die eine Information zu der Abstandsdifferenz zwischen dem ersten und zweiten Objekt (O1, O2) und dem Fahrzeug (1) enthalten.

3. Verfahren nach Anspruch 1 oder 2, **dadurch gekennzeichnet, dass** der Emitter (3, 3') zumindest ein Scheinwerfer ist, der sichtbares Licht im Wellenlängenbereich zwischen 380nm und 800nm emittiert und der erste und zweite Empfangssensor (4, 5) jeweils eine Kamera ist.

4. Verfahren nach einem der vorhergehenden Ansprüche, **dadurch gekennzeichnet, dass** der erste und zweite Empfangssensor (4, 5) ein Stereokamerasystem bilden.

5. Verfahren nach einem der vorhergehenden Ansprüche, **dadurch gekennzeichnet, dass** zumindest zwei Emitter (3, 3') in Form der Frontscheinwerfer des Fahrzeugs (1) vorgesehen sind, und jeweils ein Empfangssensor (4, 5) einem Frontscheinwerfer (3, 3') derart zugeordnet ist, dass die Sichtverbindungsgerade zwischen einem zu erfassenden Objekt (O1, O2) und dem Frontscheinwerfer im Wesentlichen parallel zu der Sichtverbindungsgerade zwischen einem zu erfassenden Objekt (O1, O2) und dem diesem Frontscheinwerfer zugeordneten Empfangssensor (4, 5) verläuft.

6. Verfahren nach einem der vorhergehenden Ansprüche, **dadurch gekennzeichnet, dass** der erste und zweite Empfangssensor (4, 5) in die Frontscheinwerfer des Fahrzeugs (1) integriert sind.

7. Verfahren nach einem der vorhergehenden Ansprüche, **dadurch gekennzeichnet, dass** das künstliche neuronale Netz (2) die Tiefenschätzung basierend auf der in horizontaler Richtung gemessenen Breite (b) des Helligkeitsunterschiede aufweisenden Bildbereichs (D1, D2) vornimmt.

8. Verfahren nach einem der vorhergehenden Ansprüche, **dadurch gekennzeichnet, dass** das künstliche neuronale Netz (2) in Bildbereichen, die durch den ersten und zweiten Empfangssensor (4, 5) erfasst werden, Tiefeninformationen basierend auf einer Triangulation zwischen Bildpunkten in den ersten und zweiten Bildinformationen (B1, B2) und dem ersten und zweiten Empfangssensor (4, 5) ermittelt.

9. Verfahren nach Anspruch 8, **dadurch gekennzeichnet, dass** das neuronale Netz (2) Tiefeninformationen, die durch Triangulation ermittelt werden, und geschätzte Tiefeninformationen, die durch die Auswertung der geometrischen Informationen des zumindest einen Helligkeitsunterschiede aufweisenden Bildbereichs (D1, D2) erhalten werden, miteinander vergleicht und basierend auf dem Vergleich angepasste Tiefeninformationen erzeugt.

10. Verfahren nach Anspruch 8 oder 9, **dadurch gekennzeichnet, dass** das künstliche neuronale Netz (2) eine Anpassung der Tiefeninformationen, die durch Triangulation ermittelt werden, basierend auf der Auswertung der geometrischen Informationen des zumindest einen Helligkeitsunterschiede aufweisenden Bildbereichs (D1, D2) vornimmt.

11. Verfahren nach einem der vorhergehenden Ansprüche, **dadurch gekennzeichnet, dass** zumindest ein Emitter (6, 6') IR-Strahlung, Radarsignale oder Laserstrahlung aussendet.

12. Verfahren nach Anspruch 11, **dadurch gekennzeichnet, dass** zumindest ein Teil der Empfangssensoren (7, 7') Infrarotkameras, Radarempfänger oder Empfänger für Laserstrahlung sind.

13. Verfahren nach einem der vorhergehenden Ansprüche, **dadurch gekennzeichnet, dass** zur Schätzung von Tiefeninformationen zu Bildinformationen, die Bereiche seitlich neben dem Fahrzeug (1) und/oder hinter dem Fahrzeug (1) darstellen, mehr als ein Emitter (3, 3', 6, 6') und mehr als zwei Empfangssensoren (4, 5, 7, 7') zur Ermittlung von Bildinformationen verwendet werden, wobei mehrere Sensorgruppen (S1, S2, S3, S4) vorgesehen sind, die jeweils zumindest einen Emitter und zumindest zwei Empfangssensoren aufweisen und wobei die Bildinformationen der jeweiligen Sensorgruppen (S1, S2, S3, S4) zu einer Gesamtbildinformation zusammengeführt werden.

14. Verfahren nach Anspruch 13, **dadurch gekennzeichnet, dass** die Sensorgruppen (S1, S2, S3, S4) zumindest teilweise elektromagnetische Strahlung in unterschiedlichen Frequenzbändern nutzen.

15. System zur Ermittlung von Tiefeninformationen zu Bildinformationen in einem Fahrzeug (1), umfassend eine Rechnereinheit (8), die Rechenoperationen eines künstlichen neuronalen Netzes (2) ausführt, zumindest einen Emitter (3, 3'), der zum Aussenden von elektromagnetischer Strahlung ausgebildet ist, und zumindest einen ersten und einen zweiten Empfangssensor (4, 5), die beabstandet zueinander angeordnet sind, wobei der erste und zweite Empfangssensor (4, 5) zum Empfangen von reflektierten Anteilen der vom Emitter (3, 3') ausgesandten elektromagnetischen Strahlung ausgebildet ist und wobei der erste Empfangssensor (4) zur Erzeugung von ersten Bildinformationen (B1) und der zweite Empfangssensor (5) zur Erzeugung von zweiten Bildinformationen (B2) basierend auf den empfangenen reflektierten Anteilen ausgebildet ist, wobei das künstliche neuronale Netz (2) dazu konfiguriert ist:
- die ersten und zweiten Bildinformationen (B1, B2) zur Bestimmung zumindest eines in den ersten und zweiten Bildinformationen enthaltenen, Helligkeitsunterschiede aufweisenden Bildbereichs (D1, D2) zu vergleichen, wobei der Helligkeitsunterschiede aufweisende Bildbereich (D1, D2) aufgrund der beabstandeten Anordnung der Empfangssensoren (4, 5) durch die Parallaxe entsteht;
- die geometrischen Informationen des zumindest einen Helligkeitsunterschiede aufweisenden Bildbereichs (D1, D2) auszuwerten und Tiefeninformationen basierend auf dem Ergebnis der Auswertung der geometrischen Informationen des zumindest einen Helligkeitsunterschiede aufweisenden Bildbereichs (D1, D2) zu schätzen.

## Claims

1. Method for determining depth information relating to image information by means of an artificial neural network (2) in a vehicle (1), comprising the following steps:
- providing at least one emitter (3, 3') and at least a first and a second receiving sensor (4, 5), the first and second receiving sensors (4, 5) being spaced apart from one another (S10);
- emitting electromagnetic radiation by the emitter (3, 3') (S11);
- receiving reflected proportions of the electromagnetic radiation emitted by the emitter (3, 3') by the first and second receiving sensors (4, 5) and generating first image information (B1) by the first receiving sensor (4) and second image information (B2) by the second receiving sensor (5) on the basis of the received reflected proportions (S12);
- comparing the first and second image information (B1, B2) for determining at least one image area (D1, D2) included in the first and second image information which comprises brightness differences and which occurs by the parallax due to the spaced-apart arrangement of the receiving sensors (4, 5) (S13);
- evaluating geometric information of the at least one image area (D1, D2) which comprises brightness differences and estimating depth information by the artificial neural network (2) on the basis of the result of the evaluation of the geometric information of the at least one image area which comprises brightness differences (S14).

2. Method according to claim 1, **characterized in that** the image area (D1, D2) which comprises brightness differences occurs in the transition area between a first object (01) and a second object (O2) which have a different distance from the first and second receiving sensors (4, 5) and **in that** the estimated depth information is depth difference information containing information relating to the distance difference between the first and second objects (O1, O2) and the vehicle (1).

3. Method according to claim 1 or 2, **characterized in that** the emitter (3, 3') is at least one headlight emitting visible light in the wavelength range between 380nm and 800nm and the first and second receiving sensors (4, 5) are each a camera.

4. Method according to any one of the preceding claims, **characterized in that** the first and second receiving sensors (4, 5) form a stereo camera system.

5. Method according to any one of the preceding claims, **characterized in that** the at least two emitters (3, 3') are the front headlights of the vehicle (1), and in each case one receiving sensor (4, 5) is assigned to a front headlight (3, 3') in such a way that the straight line of sight between an object to be detected (O1, O2) and the front headlight runs substantially parallel to the straight line of sight between an object to be detected (O1, O2) and the receiving sensor (4, 5) assigned to this front headlight.

6. Method according to any one of the preceding claims, **characterized in that** the first and second receiving sensors (4, 5) are integrated in the front headlights of the vehicle (1).

7. Method according to any one of the preceding claims, **characterized in that** the artificial neural network (2) estimates the depth on the basis of the width (b), measured in the horizontal direction, of the image area (D1, D2) which comprises brightness differences.

8. Method according to any one of the preceding claims, **characterized in that** the artificial neural network (2) determines depth information in image areas detected by the first and second receiving sensors (4, 5) on the basis of a triangulation between pixels in the first and second image information (B1, B2) and the first and second receiving sensors (4, 5).

9. Method according to claim 8, **characterized in that** the neural network (2) compares depth information determined by triangulation and estimated depth information obtained by evaluating the geometric information of the at least one image area (D1, D2) which comprises brightness differences and generates modified depth information on the basis of the comparison.

10. Method according to claim 8 or 9, **characterized in that** the artificial neural network (2) modifies depth information obtained by triangulation on the basis of the evaluation of the geometric information of the at least one image area (D1, D2) which comprises brightness differences.

11. Method according to any one of the preceding claims, **characterized in that** at least one emitter (6, 6') emits IR radiation, radar signals or laser radiation.

12. Method according to claim 11, **characterized in that** at least part of the receiving sensors (7, 7') are infrared cameras, radar receivers or receivers for laser radiation.

13. Method according to any one of the preceding claims, **characterized in that**, for estimating depth information relating to image information representing areas laterally adjacent to the vehicle (1) and/or behind the vehicle (1), more than one emitter (3, 3', 6, 6') and more than two receiving sensors (4, 5, 7, 7') are used to determine image information, a plurality of sensor groups (S1, S2, S3, S4) being provided which each have at least one emitter and at least two receiving sensors, and the image information of the respective sensor groups (S1, S2, S3, S4) being combined to form overall image information.

14. Method according to claim 13, **characterized in that** the sensor groups (S1, S2, S3, S4) at least partially use electromagnetic radiation in different frequency bands.

15. System for determining depth information relating to image information in a vehicle (1), comprising a computer unit (8) which executes arithmetic operations of an artificial neural network (2), at least one emitter (3, 3') which is configured to emit electromagnetic radiation, and at least one first and one second receiving sensor (4, 5) which are arranged at a distance from one another, the first and second receiving sensors (4, 5) being configured to receive reflected proportions of the electromagnetic radiation emitted by the emitter (3, 3'), and the first receiving sensor (4) being configured to generate first image information (B1) and the second receiving sensor (5) being configured to generate second image information (B2) on the basis of the received reflected proportions, the artificial neural network (2) being configured to:
- compare the first and second image information (B1, B2) for determining at least one image area (D1, D2) included in the first and second image information which comprises brightness differences, the image area (D1, D2) which comprises brightness differences occurring by the parallax due to the spaced-apart arrangement of the receiving sensors (4, 5);
- evaluating the geometric information of the at least one image area (D1, D2) which comprises brightness differences and estimating depth information on the basis of the result of the evaluation of the geometric information of the at least one image area (D1, D2) which comprises brightness differences.

## Revendications

1. Procédé pour déterminer des informations de profondeur relatives à des informations d'image à l'aide d'un réseau neuronal artificiel (2) dans un véhicule (1), comprenant les étapes suivantes consistant à :
- fournir au moins un émetteur (3, 3') et au moins un premier et un deuxième capteur de réception (4, 5), les premier et deuxième capteurs de réception (4, 5) étant disposés à distance l'un de l'autre (S10) ;
- émettre un rayonnement électromagnétique par l'émetteur (3, 3') (S11) ;
- recevoir des composantes réfléchies du rayonnement électromagnétique, émis par l'émetteur (3, 3'), par les premier et deuxième capteurs de réception (4, 5), et générer des premières informations d'image (B1) par le premier capteur de réception (4) et des deuxièmes informations d'image (B2) par le deuxième capteur de réception (5) sur la base des composantes réfléchies reçues (S12) ;
- comparer les premières et deuxièmes informations d'image (B1, B2) pour déterminer au moins une zone d'image (D1, D2) contenue dans les premières et deuxièmes informations d'image et présentant des différences de luminosité, qui est créée par la parallaxe en raison de la disposition espacée des capteurs de réception (4, 5) (S13) ;
- évaluer des informations géométriques de ladite au moins une zone d'image (D1, D2) présentant des différences de luminosité, et estimer des informations de profondeur par le réseau neuronal artificiel (2) sur la base du résultat de l'évaluation des informations géométriques de ladite au moins une zone d'image (D1, D2) présentant des différences de luminosité (S14).

2. Procédé selon la revendication 1,
**caractérisé en ce que** la zone d'image (D1, D2) présentant des différences de luminosité se trouve dans la zone de transition entre un premier objet (O1) et un deuxième objet (O2) qui présentent des distances différentes par rapport au premier et au deuxième capteur de réception (4, 5), et
**en ce que** les informations de profondeur estimées sont des informations de différence de profondeur qui contiennent une information sur la différence de distance entre le premier et le deuxième objet (O1, O2) et le véhicule (1).

3. Procédé selon la revendication 1 ou 2,
**caractérisé en ce que** l'émetteur (3, 3') est au moins un phare qui émet de la lumière visible dans la gamme de longueurs d'onde comprise entre 380 nm et 800 nm, et les premier et deuxième capteurs de réception (4, 5) sont chacun une caméra.

4. Procédé selon l'une des revendications précédentes,
**caractérisé en ce que** les premier et deuxième capteurs de réception (4, 5) constituent un système de caméras stéréoscopiques.

5. Procédé selon l'une des revendications précédentes,
**caractérisé en ce qu'**il est prévu au moins deux émetteurs (3, 3') sous la forme des phares avant du véhicule (1), et un capteur de réception (4, 5) est associé à chaque phare avant (3, 3') de sorte que la ligne de visée entre un objet à détecter (O1, O2) et le phare avant soit sensiblement parallèle à la ligne de visée entre un objet à détecter (O1, O2) et le capteur de réception (4, 5) associé à ce phare avant.

6. Procédé selon l'une des revendications précédentes,
**caractérisé en ce que** les premier et deuxième capteurs de réception (4, 5) sont intégrés dans les phares avant du véhicule (1).

7. Procédé selon l'une des revendications précédentes,
**caractérisé en ce que** le réseau neuronal artificiel (2) effectue l'estimation de la profondeur sur la base de la largeur (b), mesurée dans la direction horizontale, de la zone d'image (D1, D2) présentant des différences de luminosité.

8. Procédé selon l'une des revendications précédentes,
**caractérisé en ce que** dans des zones d'image détectées par les premier et deuxième capteurs de réception (4, 5), le réseau neuronal artificiel (2) détermine des informations de profondeur sur la base d'une triangulation entre des points d'image dans les premières et deuxièmes informations d'image (B1, B2) et les premier et deuxième capteurs de réception (4, 5).

9. Procédé selon la revendication 8,
**caractérisé en ce que** le réseau neuronal (2) compare entre elles les informations de profondeur, déterminées par triangulation, et les informations de profondeur estimées, obtenues par l'évaluation des informations géométriques de ladite au moins une zone d'image (D1, D2) présentant des différences de luminosité, et génère des informations de profondeur adaptées sur la base de la comparaison.

10. Procédé selon la revendication 8 ou 9,
**caractérisé en ce que** le réseau neuronal artificiel (2) effectue une adaptation des informations de profondeur, déterminées par triangulation, sur la base de l'évaluation des informations géométriques de ladite au moins une zone d'image (D1, D2) présentant des différences de luminosité.

11. Procédé selon l'une des revendications précédentes,
**caractérisé en ce qu'**au moins un émetteur (6, 6') émet un rayonnement infrarouge, des signaux radar ou un rayonnement laser.

12. Procédé selon la revendication 11,
**caractérisé en ce qu'**au moins une partie des capteurs de réception (7, 7') sont des caméras infrarouges, des récepteurs radar ou des récepteurs de rayonnement laser.

13. Procédé selon l'une des revendications précédentes,
**caractérisé en ce que**, pour estimer des informations de profondeur relatives à des informations d'image qui représentent des zones situées latéralement à côté du véhicule (1) et/ou derrière le véhicule (1), il est prévu plus d'un émetteur (3, 3', 6, 6') et plus de deux capteurs de réception (4, 5, 7, 7') utilisés pour déterminer des informations d'image, et il est prévu plusieurs groupes de capteurs (S1, S2, S3, S4) qui comportent chacun au moins un émetteur et au moins deux capteurs de réception, et les informations d'image des groupes de capteurs respectifs (S1, S2, S3, S4) sont regroupées en une information d'image globale.

14. Procédé selon la revendication 13,
**caractérisé en ce que** les groupes de capteurs (S1, S2, S3, S4) utilisent au moins en partie un rayonnement électromagnétique dans différentes bandes de fréquences.

15. Système pour déterminer des informations de profondeur relatives à des informations d'image dans un véhicule (1), comprenant une unité de calcul (8) qui effectue des opérations de calcul d'un réseau neuronal artificiel (2), au moins un émetteur (3, 3') conçu pour émettre un rayonnement électromagnétique, et au moins un premier et un deuxième capteur de réception (4, 5) qui sont disposés à distance l'un de l'autre,
dans lequel
les premier et deuxième capteurs de réception (4, 5) sont conçus pour recevoir des composantes réfléchies du rayonnement électromagnétique, émis par l'émetteur (3, 3'), et
le premier capteur de réception (4) est conçu pour générer des premières informations d'image (B1) et le deuxième capteur de réception (5) est conçu pour générer des deuxièmes informations d'image (B2) sur la base des composantes réfléchies reçues,
le réseau neuronal artificiel (2) est configuré pour :
- comparer les premières et deuxièmes informations d'image (B1, B2) afin de déterminer au moins une zone d'image (D1, D2) contenue dans les premières et deuxièmes informations d'image et présentant des différences de luminosité, la zone d'image (D1, D2) présentant des différences de luminosité étant créée par la parallaxe en raison de la disposition espacée des capteurs de réception (4, 5) ;
- évaluer les informations géométriques de ladite au moins une zone d'image (D1, D2) présentant des différences de luminosité, et estimer les informations de profondeur sur la base du résultat de l'évaluation des informations géométriques de ladite au moins une zone d'image (D1, D2) présentant des différences de luminosité.
